# EUROPEAN PATENT APPLICATION

(11) **EP 4 481 777 A1**
(43) Date of publication of application: **25.12.2024**
(21) Application number: 23181126.6
(22) Date of filing: 23.06.2023
(51) Int. Cl.: H01G 5/16, H01G 5/01, H01G 5/38, H01G 5/014, H01G 5/00, H01G 5/14, H01H 33/66

(54) **VACUUM CAPACITOR WITH INCREASED VOLTAGE CAPACITY**

(71) Applicant: Comet AG, 3175 Flamatt (CH)
(72) Inventor: Halscheid, Jakob Benjamin, 3175 Flamatt (CH); Bauer, Benjamin, 3175 Flamatt (CH)
(74) Representative: dompatent von Kreisler Selting Werner - Partnerschaft von Patent- und Rechtsanwälten mbB

(57) **Abstract**

The present invention relates to a vacuum capacitor (100) comprising a housing (105) to contain a vacuum dielectric medium (108), a first electrode (106) and a second electrode (107) separated by said vacuum dielectric medium (108), the housing (105) comprising an insulating element (104), a first conductive collar (102) in electrical contact with the first electrode (106) and a second conductive collar (104) in electrical contact with the second electrode (107), wherein the first conductive collar (102) and the second conductive collar (104) are connected to the insulating element (103) in an air-tight manner by means of a braze material creating a first braze joint (113) and a second braze joint (114), in which the insulating element (103) comprises at least one shoulder (120) which is located so to prevent that the first braze joint (113) and/or the second braze joint (114) are in contact with the outer surface (103a) of the insulating element (103) of the housing (105).

## Description

### Technical field of the invention

The present invention relates generally to the field of vacuum capacitors. More precisely, the present invention relates to vacuum capacitors with a housing comprising an insulating element of modified cylindrical shape making it possible to be operated safely and accurately at higher voltages.

### State of the art

Vacuum capacitors are well known in the prior art: a first patent for a vacuum capacitor has been filed by Nikola Tesla in 1896. The original use of a vacuum as the dielectric for a capacitor was to enhance the properties of the capacitor, notably allowing higher voltages to be applied between the capacitor electrodes and higher AC currents to flow through the capacitor as compared to capacitors with other dielectrics. In particular, the electric losses of vacuum are zero, unlike other dielectrics which have losses (and for a given current therefore result in a temperature rise). Moreover, vacuum capacitors are much more stable also with varying environmental temperature than those capacitors using gaseous, liquid or solid dielectrics whose dielectric permittivity varies with temperature and also with frequency of the applied signal. Incidentally, the permittivity *ε* of any non-vacuum material is reported as a product of its relative (to vacuum) permittivity *εᵣ* multiplied by the permittivity of vacuum which is a physical constant: *ε* = *ε₀. εᵣ*.

Vacuum capacitors are typically realized with a roughly cylindrical shape because this is advantageous for AC current flow, especially at high frequency. Vacuum capacitors can be designed having a fixed capacitance value or alternatively can be designed to include a moving mechanism which allows one electrode to be moved with respect to the other, thereby changing the capacitance value of the vacuum capacitor. Note that this change of capacitance can be accurately controlled also during operation of the capacitor while at the same time maintaining the necessary vacuum. To this effect, a screw-nut system and a guiding system along the axis of cylindrical symmetry is implemented and metallic expandable bellows complete the vacuum housing near the axis of symmetry to allow an air-tight transfer of movement from outside the housing to the inside of the housing thereby allowing to "guide" one of the electrodes (then often referred to as the variable electrode) up and down the axis of cylindrical geometry. This movement of one electrode (while the other one is static) allows to control the capacitance of the device. Other moving mechanisms may also be implemented, including, for example, magnetically actuated movements not requiring bellows. For sake of simplicity, the invention will not go into details of the moving mechanism, as the invention can be applied equally to fixed vacuum capacitors and variable vacuum capacitors.

Today, vacuum capacitors are generally used in applications where both high frequencies and high power are required. Common applications include, for example, oscillation circuits for use in high power radio frequency transmission, or high frequency power supplies for use in manufacture of semiconductors, solar panels and flat panel displays. Other applications in industrial heating, in medical applications and in particle accelerators, among others, are also known.

Vacuum capacitors comprise two or more conducting surfaces, commonly called electrodes, separated by a dielectric medium which is vacuum. In order to achieve and maintain over time a sufficiently good vacuum, vacuum capacitors comprise a gas-tight housing inside of which the volume is pumped down to a pressure value in the high-vacuum or even the ultra-high vacuum range containing electrodes which are arranged at a distance of, and facing each other, and hence the metal electrodes are separated by the vacuum dielectric. The electrodes in the vacuum housing (sometimes also called vacuum enclosure or vacuum container) are the capacitance-generating surfaces whose size and separation distance determine the value of the generated capacitance. The separation distance is also a major factor determining the voltage limit of such capacitors, owing to the electric field strength achievable in vacuum.

Typically, the housing comprises an insulating element, often in form of a mostly hollow cylindrical part and typically made of ceramic (for example alumina - Al₂O₃ - ceramic), and two end-pieces, often referred to as "collars", made of metal, typically copper or copper alloys or any other good electrical conducting material. The end-pieces, together with the insulating element of the housing hermetically seal the housing of the capacitor. As described before, in the case of variable vacuum capacitors, the housing also comprises metallic expandable bellows. In any case, the metallic end-pieces or collars are brazed to the longitudinal surfaces of the cylindrical insulating element during the manufacturing process of the vacuum capacitor. The cylindrical insulating element has an outer diameter that forms an outer surface boundary between the insulator and the air outside the vacuum capacitor and has an inner diameter that forms an inner surface boundary between the insulator and the vacuum volume when the vacuum capacitor is assembled. In prior art vacuum capacitors, the insulating cylinder's length at the outer diameter is equal to the cylinder's length at the inner diameter. This is chosen for simplicity but, as we will discuss later, can present disadvantages.

Positioned inside the vacuum enclosure, each electrode is in electrical contact with one of the metallic collars but is at the same time isolated from the other electrode and the other metallic collar by the dielectric vacuum medium and by the insulating element of the housing.

The vacuum dielectric medium allows for achieving vacuum capacitors with high voltages, typically in the range of kilovolts (kV) or tens of kilovolts (kV) even though dimensions of vacuum capacitors are of the order of only a few cm or tens of cm. However, each vacuum capacitor has a maximum operating voltage after which an uncontrolled discharge, also called dielectric breakdown (or vacuum breakdown in the case of vacuum), can occur. Although higher values have been reported in laboratory settings, the persons skilled in the art of vacuum capacitors know that vacuum dielectric can withstand about 20 to 30 kV per mm of electrode separation whereas the ceramic dielectric (for the above-mentioned alumina) can withstand about 10 kV per mm thickness. These values are indicative because many aspects have an influence, especially the chemical purity of the electrodes in vacuum, the microscopic smoothness of the electrode surfaces and in case of the ceramic dielectric (which is exposed on one side to air), the environmental properties (temperature, humidity,...) and also the precise composition of the ceramic dielectric. Note that the breakdown values in atmospheric air (which is also a dielectric) is of the order of 2 to 3 kV per mm only, therefore much less favourable than that of vacuum. When breakdown occurs, an unwanted current flows between the electrodes of the vacuum capacitor or between the vacuum capacitor end-pieces through the air or over the ceramic surfaces or, as will be discussed later, between the brazing joints used to connect the ceramic with the end-pieces in a vacuum tight way. In yet another scenario, it is possible that breakdown occurs between the vacuum capacitor enclosure and another electrically conductive component outside the capacitor itself which may be at a different electrical potential.

In most practical cases, there is not so much a need to take care of the breakdown problems outside the vacuum capacitor housing, i.e. over the ceramic of the housing or through the adjacent air because in most cases, the limiting factor will be the voltage capability between the electrodes that are separated by the dielectric vacuum medium. This is because in most practical cases, the electrode surfaces need to be tightly packed inside the (limited) vacuum volume, which therefore results in small, hence critical, electrode separation. In other words, a vacuum medium breakdown between the electrodes inside the vacuum capacitor will generally occur before it comes to an uncontrolled discharge on the outside of the vacuum enclosure or between the vacuum capacitor and an external component. However, there are some applications in which there is at the same time a need for a relatively small capacitance but still in combination with high application voltages. In such cases, it is possible to design vacuum capacitors with electrodes having smaller surfaces and therefore, for a given available volume, a bigger spacing between the electrodes inside the vacuum dielectric can be used. This design implies a reduced risk of uncontrolled internal discharge at high voltages, i.e. between the electrodes inside the vacuum capacitor. As a consequence, such a vacuum capacitor can be sold with a higher voltage rating on the market. However, in such cases, the risk of uncontrolled external discharge, i.e. the uncontrolled discharge on the outside of the vacuum enclosure or between the vacuum capacitor and an external component, becomes evidently higher than the risk of uncontrolled internal discharge and needs to be addressed.

This problem is aggravated due to the specificities of the manufacturing process of vacuum capacitors. As mentioned above, a typical vacuum capacitor comprises a housing with an insulating element, such as a ceramic cylinder, and two conductive end-pieces ("collars") enclosing the insulating element on both sides. These collars are brazed to the insulating element during a manufacturing step of the vacuum capacitor in order to guarantee an air-tight connection, not compromising the vacuum dielectric inside the housing. Nevertheless, the ceramics material of the insulating element cannot be directly brazed to metals, in particular to copper which is the most commonly used material. Therefore, the ceramic surfaces of the insulating element to which the metallic end-pieces ("collars") are brazed need to be metallized, such that a braze filler material will properly wet the surface at brazing temperature and upon cool-down the contact surfaces will result in a good contact joint between the ceramic insulator and the metal end-pieces. In particular that surface contact joint needs to be air-tight reliably over a long time period as vacuum capacitor are "sealed-for-life" devices, meaning that after manufacture they are sealed and cannot be pumped again (in contrast to, for example, vacuum chambers which can be pumped down by attaching vacuum pumps at flanges of the vacuum chambers).

Coming back to the brazing process, at brazing temperature, typically done at temperatures above 700°C, the braze filler material liquifies and tends to flow and can form irregular shapes on the surfaces of the insulating element once cooled down after the brazing process. These irregular (and possibly pointy) shapes are very unfavourable, especially if they flow past the outer diameter of the insulating element because they will later enhance any applied electrical field and create points at which the risk of breakdown is severely increased. In fact, the sharper these shapes at the outer surfaces are, the stronger the resulting electric field at these points for a given operating voltage and the higher the risk of an uncontrolled discharge occurring on the outside surface of the housing of the vacuum capacitor. It is reminded here that both during the manufacturing step of high-voltage conditioning of the capacitor (sometimes also called "electric forming of the capacitor") and also during the future operation of the vacuum capacitor, the two end-pieces of the vacuum capacitors are at highly dissimilar electric voltages, and they are separated by the ceramic and by air on the outside of the vacuum housing presenting a risk of breakdown along the outside of the capacitor housing. Similarly, when in operation, the end-pieces of the vacuum capacitor (and its contact surfaces with the ceramic) may be in somewhat close proximity to other components at dissimilar volage and the risk of catastrophic breakdown occurring between the vacuum capacitor and another component has to be considered. For example, most vacuum capacitors are integrated into impedance matching networks (those are boxes containing variable vacuum capacitors, one or more coils, cooling fans, connectors, and other parts). The impedance matching networks are typically used as adjusting elements in radio-frequency (RF) power delivery equipment to deliver RF power to a plasma (ionized gas). Such plasma processing is widely used for etching and deposition of material on a wafer or other semi-conductor substrate by means of RF plasma. So, if there are pointy shapes protruding away from the vacuum capacitor near the brazing contact zone of the ceramic and the end-pieces, then there is an enhanced risk of voltage breakdown inside the impedance matching network toward another component of the power delivery equipment. So, an advantage would be to somehow be able to protect the problem zones, namely the brazing joints (contact surfaces of the ceramic with the end-pieces of the vacuum capacitor).

A solution to this problem has already been suggested in the document EP 3 891 769 A1 (by the same applicant). There, it has been proposed to use protection means made of a partially conductive elastomer with a smoother surface to cover the pointy shapes resulting from the brazing process. However, this proposal requires a use of additional elements thus making the manufacturing process more complex than the manufacturing process of a common vacuum capacitor.

With this in mind, there is a need to provide for a vacuum capacitor with a low risk of unwanted uncontrolled discharge between the vacuum capacitor and an external component (or between the two end-pieces along the insulator element's outer surface), while simultaneously simplifying the manufacturing process of the vacuum capacitor disclosed in the above-identified patent application.

### Summary of the invention

To this end, the present invention discloses a solution in which the insulating element of the housing, in particular the insulating element made of a ceramic, has a particular shape improving the position of the brazing joint between the metallic collars (the term "collars" and "end-pieces" of the vacuum capacitor are to be considered synonymous throughout this application) and the insulating element of the housing. Thanks to this improvement, the risk associated with the creation of pointy shapes at the outer surfaces of the insulating element during the brazing step of vacuum capacitor manufacture can be massively reduced without need for additional protective means. As a result, according to the present invention, it is possible to manufacture a vacuum capacitor which will sustain higher voltage capabilities compared to the conventional vacuum capacitors in a simple manner. Obviously, higher voltages are desirable because the capacitor can be used for higher power applications or/and can be designed in a more compact footprint.

More specifically, the present invention discloses a vacuum capacitor comprising a housing to contain a vacuum dielectric medium, a first electrode and a second electrode separated by said vacuum dielectric medium, the housing comprising an insulating element, a first conductive collar in electrical contact with the first electrode and a second conductive collar in electrical contact with the second electrode, wherein the first conductive collar and the second conductive collar are connected to the insulating element in an air-tight manner by means of a braze material creating a first braze joint and a second braze joint, in which the insulating element comprises at least one shoulder which is located so to prevent that the first braze joint and/or the second braze joint are in contact with the outer surface of the insulating element of the housing.

Thanks to this invention, the brazing joints between the conductive metallic collars and the ceramic insulating element of the housing are moved away from the outer cylindrical edge of the ceramic, i.e. cut off from the outer cylindrical surface of the housing. In this way, the brazing joints (which may comprise pointy shapes due to the brazing process) are moved away from the highest electrical field area along the outer surface of the ceramic. At the time of brazing, the liquified braze filler material cannot move to the outer surface and create pointy shapes that will have an adverse effect on the electrical performance of the vacuum capacitor in operation. Even if such pointy shapes are generated by the brazing step, the location of these pointy shapes will be less critical because in a lower electric field area. Therefore, a vacuum capacitor with an increased voltage capability can be manufactured in a simple manner. In addition, in a step following the brazing step, the capacitor can now be conditioned more safely to a higher voltage because the improved geometrical shape also allows an improved and safer conditioning step during manufacture of the vacuum capacitor. Indeed, it is common for vacuum capacitors to be "conditioned" progressively to higher voltages during the manufacture and before delivery to the customers. Such conditioning steps may include DC and/or AC conditioning steps with multiple (typically increasing) voltages and using one or several frequencies of the AC signal to condition the vacuum capacitor to sustain appropriately high voltages demanded by the customer applications.

In a preferred embodiment of the present invention, the at least one shoulder is located so to follow the entire circumference of the insulating element. In this way, the entire circumference is protected and the brazing filler material cannot get in contact with the outer surface of the insulating element at any place.

A shoulder implies that the edge surfaces of the insulating element, i.e. the surfaces on which the conductive collars are placed and brazed to the insulating element, have a shape of a letter L, when seen in a section view. In other words, the edge surfaces have a lower and a higher portion. Preferably, in such a configuration, the first conductive collar and/or the second conductive collar are brazed to the insulating element on the lower side of the shoulder, i.e. on the lower of the both portions of the edge surfaces. This means that any braze filler material would be prevented to flow to the outer diameter surface of the insulating element. In this way, the shoulder makes a physical barrier between the brazed contact surfaces and the outside surface of the insulating element, preventing therefore the flow of brazing filler material to the outside diameter. Alternatively, the shoulder does not necessarily need to have a shape of a letter L with sharp edges, but can also have essentially rounded edges as long as it still comprises a higher and a lower portion allowing the insulating element to be brazed on the lower side of the shoulder and preventing the flow of the braze filler material to the outer diameter surface of the insulating element.

In another embodiment, the shoulder is flush with the outer surface of the insulating element. This embodiment is advantageous because the manufacturing of the insulating element can be simplified because the forming of the shoulder needs to be realised only on one side of the insulating element, keeping the outer surface. However, it is also possible to locate the shoulder at a position that is a radially shorter distance from the central axis of the vacuum capacitor than the outer surface of the insulating element. In other words, it is possible to position the higher portion of the shoulder more inward than the outer surface of the insulating element.

In a preferred embodiment, the at least one shoulder is integrally formed within the insulating element. In this way, there is no need for additional manufacturing steps when manufacturing the vacuum capacitor according to the present invention. Alternatively, the at least one shoulder can also be realised by adding a separate component, attached to the insulating element by any appropriate means, making the manufacturing more versatile as one single insulating element with flat edge surface could be used for all different variable capacitors and the exact shape and dimensions of the shoulder could then be realized separately in function of the specific design allowing the manufacture of separate variants of essentially the same basic design.

In this case, the shoulder as a separate component can have sharp edges but can also comprise at least one rounded edge.

Finally, in another embodiment, the vacuum capacitor can comprise two shoulders positioned at a distance one from the other, forming therefore essentially a U-shaped groove. In other words, the higher portions of both shoulders can surround a grove built by the lower portion of the shoulders so that the first conductive collar and/or the second conductive collar can be brazed to the insulating element in this U-shaped grove that can therefore host the first braze joint and/or the second braze joint. In this case, the braze filler material would remain in the groove between the higher portions of both shoulders and would not be able to flow to the outer diameter surface of the insulating element.

### Short description of the drawings

The invention will be better understood and objects other than those set forth above will become apparent when consideration is given to the following detailed description thereof. Such description makes reference to the annexed drawings wherein:
Figure 1a is a section view of a vacuum capacitor known in the prior art;
Figure 1b is a close up of Fig.1a illustrating the ceramic-collar brazing joint;
Figure 2 is a section view of a vacuum capacitor according to the present invention;
Figure 3a is a detailed section view of the brazing joint of the vacuum capacitor of Figure 2;
Figure 3b shows another possible embodiment of the present invention, showing an alternative rounded shoulder shape of the ceramic insulating element;
Figure 3c show another possible embodiment of the present invention, showing a shoulder being formed by adding a separate component to the ceramic insulating element; and
Figure 3d shows yet another possible embodiment of the present invention, showing a "double shoulder shape" comprised of one shoulder near the inner diameter and one shoulder near the outer diameter of the ceramic insulating element.

### Detailed description of the preferred embodiments of the invention

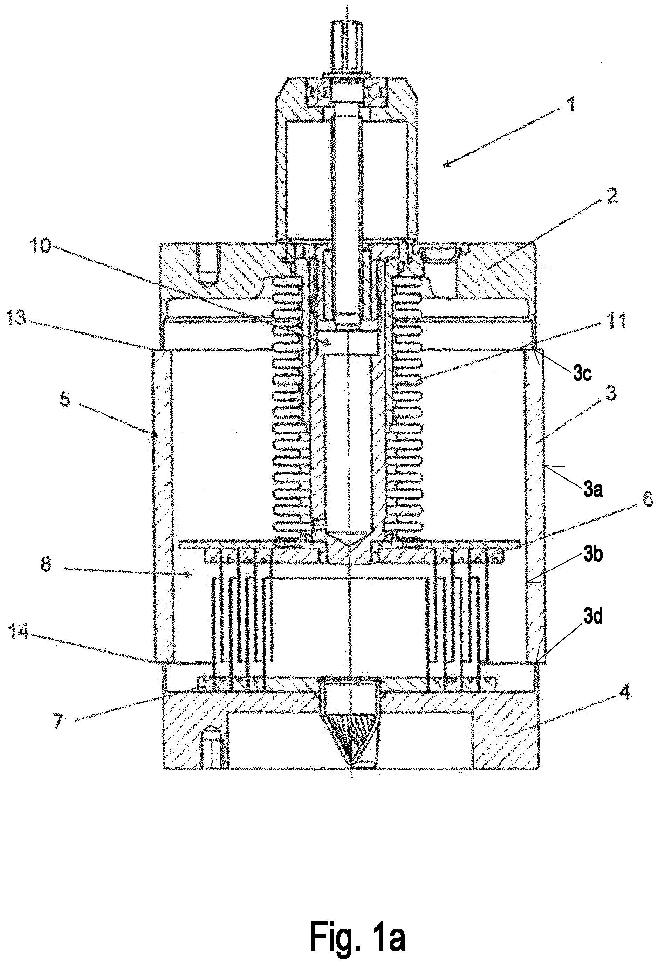

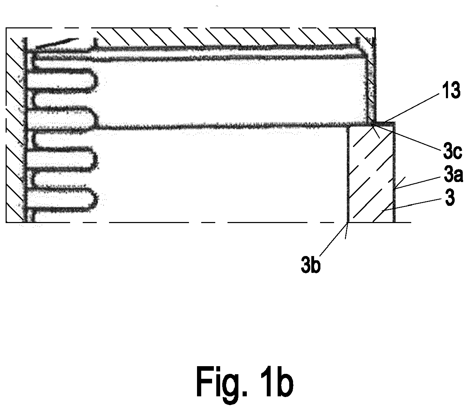

Figure 1a shows a section view of a vacuum capacitor 1 known in the art. Such a vacuum capacitor typically comprises an enclosure 5 for containing a vacuum dielectric medium 8 and capacitive generating surfaces, i.e. a first electrode 6 and second electrode 7, positioned inside the enclosure 5 and within the vacuum dielectric medium 8.

The enclosure 5 is composed of a first conductive collar 2 and a second conductive collar 4 separated by an insulating element 3. Generally, the insulating element 3 of the enclosure 5 is made of a ceramic material and has a cylindrical shape. Note in particular that, in this prior art vacuum capacitor, the insulating element 3 has an outer surface 3a and an inner surface 3b respectively corresponding to an outer diameter and an inner diameter of the insulating element and that the length of the insulating element at the outer diameter is equal to the length of the insulating element at the inner dime-ter. In other words, the lateral end surfaces 3c and 3d of the insulating element 3 are flat and parallel to each other. In addition, the first electrode 6 and the second electrode 7 are in electric contact with conductive collars 2 and 4 respectively.

As illustrated in Figure 1a, the vacuum capacitor 1 can in particular be a variable vacuum capacitor in which the position of the first electrode 6 with respect to the second electrode 7 (and thus the surface overlap of both electrodes 6 and 7) can be adjusted by means of a moving mechanism 10 that comprises an expandable bellows 11 that guarantees that the displacement of the first electrode 6 will not have an adverse effect on the vacuum dielectric medium 8 inside the enclosure 5. However, it is to be noted that the present invention is not limited to variable vacuum capacitors and that all functional elements of the present invention can also be implemented in a fixed vacuum capacitors with identical effects.

When manufacturing the vacuum capacitor 1, metallic end-pieces also called collars 2 and 4 are brazed to the insulating element 3 creating the braze joints 13 and 14. To this end, specific brazing filler materials can be used. Commonly, as visible in Figure 1a, the lateral end surfaces 3c and 3d of the insulating element 3 to which the first metallic collar 2 or the second metallic collar 4 are brazed, are flat so that the metallic collars 2 and 4 are placed on this flat surface and then joined to the insulating element 3 by means of the brazing filler material that, during the brazing process, liquifies and tends to flow along the surfaces 3c and 3d towards the outer surface 3a. In this way, the brazing joints 13 and 14 have a direct connection to the outer surface 3a of the cylindrical insulating element 3 and, as explained above, the liquified braze filler material can flow to this outside surface 3a and produce pointy shapes that have an adverse effect on the voltage capacity of the vacuum capacitor, especially when present at the edge formed by surfaces 3a and 3c (and also 3a and 3d)

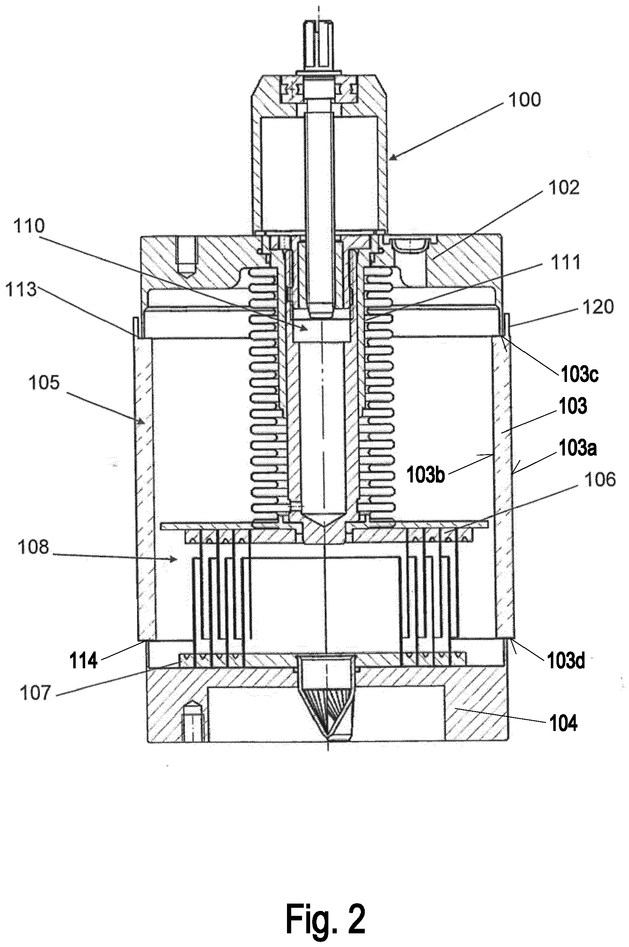

In the vacuum capacitor according to the invention, this issue has been solved as is visible in Figure 2 that shows a section view of a vacuum capacitor 100 according to the present invention. As with vacuum capacitors of prior art, the vacuum capacitor 100 according to the present invention also comprises an enclosure 105 for containing a vacuum dielectric medium 108 and two electrodes 106 and 107 within the vacuum dielectric medium 108 inside the enclosure 105.

The enclosure 105 comprises a first conductive collar 102 and a second conductive collar 104 separated by an insulating element 103. Note in particular that the insulating element 103 has an outer surface 103a and an inner surface 103b respectively corresponding to an outer diameter and an inner diameter of the insulating element 103. Further, by the insulating element lateral end surfaces 103c and 103d are defined. The first electrode 106 and the second electrode 107 being in electric contact with conductive collars 102 and 104, respectively, at the lateral end surfaces 103c and 103d. Also, the position of the first electrode 106 with respect to the second electrode 107 can be adjusted by means of a moving mechanism 110 that comprises an expandable bellows 111.

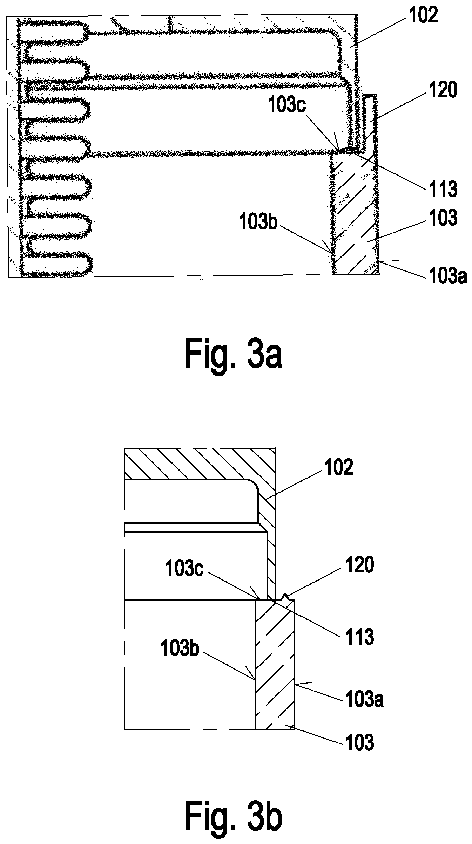

The difference between the vacuum capacitor 100 according to the present invention and the conventional vacuum capacitor 1 is the shape of the insulating element 103. As is visible in Figure 2 and more distinctively also in Figure 3a (which is a detailed section view of the brazing joint of the vacuum capacitor of Figure 2), the insulating element 103 comprises at the lateral end surface 103c a shoulder 120 (instead of a flat lateral end surface) of the insulating element 103 to which the first conductive collar 102 is brazed by braze joint 113. It is to be noted at this point that, although Figures 2 and 3a only show the shoulder 120 at lateral end surface 103c of the insulating element 103 connected to the first conductive collar 102, the invention is not limited to this design and the insulating element 103 according to the invention can also comprise a shoulder 120 at braze joint 114 on the other lateral end surface 103d connected to the second conductive collar 104, or on both lateral end surfaces 103c, 103d, i.e. on the surfaces of connection with both the first conductive collar 102 and the second conductive collar 104.

The shoulder 120 on the lateral end surfaces of the insulating element 103 result in a lower portion and a higher portion of the lateral end surface of the insulating element 103. The first and second conductive collars 102 and 104 can be brazed to the lower surface, i.e. the surface which is closer to the inner diameter of the insulating element 103. Therefore, when the vacuum capacitor 100 is manufactured and the metallic collars 102 and/or 104 brazed to the insulating element 103, braze joints 113 (and/or 114, if a shoulder 120 is present at the opposite lateral end surface 103d) are not in connection with the outer surface 103a of the insulating element 103 as any flow of the melted braze filler material during the brazing step would be blocked by the shoulder 120. As a consequence, the brazing filler material cannot flow to the outer surface 103a of the insulating element 103 and no pointy shapes can be formed at the critical outer edge of the insulating element 103 exposed to the air environment.

Figure 3b shows another embodiment of the present invention where the shoulder 120 has rounded edges and is placed slightly more radially inward. This is to illustrate that other shapes may be used instead of the L-shape shoulder illustrated in Figures 2 and 3a, provided such shape will prevent the braze filler material 113 to flow to the outer edge 103a of the cylindrical insulating element 103. This particular embodiment may be advantageous for integrating the vacuum capacitor into an impedance matching network allowing more space for other components of the impedance matching network.

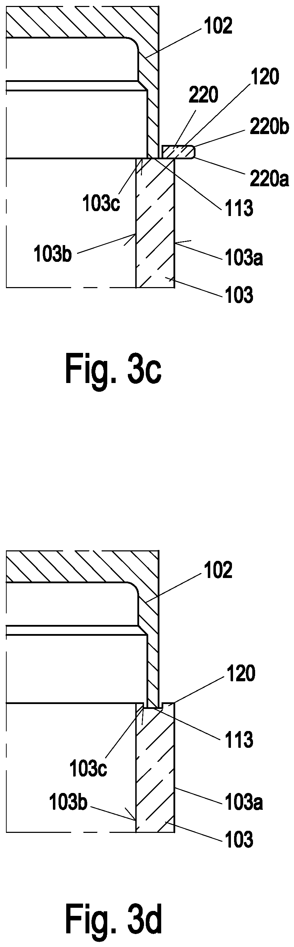

Figure 3c shows another embodiment of the present invention, where the shoulder 120 is not integral with the insulating element 103, but is formed by adding a separate component 220 to the ceramic insulating element 103. Note that, although this shoulder extends beyond the outer diameter of the ceramic insulating element 103, it can still fulfil its function of preventing the braze filler material of braze joint 113 of reaching the outer edge 103a of the ceramic insulating element 103. This particular embodiment may be advantageous as the separate component can be manufactured separately from the insulating ceramic element 103. Such separate manufacturing may include for example rounding the edges 220a and 220b of the separate component 220 and later attaching the separate component 220 to the insulating element 103.

Figure 3d shows yet another embodiment of the present invention, illustrating a double shoulder 120 forming essentially a U-shape surface to precisely braze the ceramic insulating element 103 with the collar 102.. As with previous embodiments illustrated in Figures 3a, 3b and 3c, the brazing joint 113 in Figure 3d is also displaced away from the outer edge 103a of the ceramic insulating element 103.

## Claims

1. Vacuum capacitor (100) comprising a housing (105) to contain a vacuum dielectric medium (108), a first electrode (106) and a second electrode (107) separated by said vacuum dielectric medium (108), the housing (105) comprising an insulating element (103), a first conductive collar (102) in electrical contact with the first electrode (106) and a second conductive collar (104) in electrical contact with the second electrode (107), wherein the first conductive collar (102) and the second conductive collar (104) are connected to the insulating element (103) in an air-tight manner by means of a braze material creating a first braze joint (113) and a second braze joint (114),
**characterized in that**
the insulating element (103) comprises at least one shoulder (120) which is located so to prevent that the first braze joint (113) and/or the second braze joint (114) are in contact with the outer surface of the insulating element (103) of the housing (105).

2. Vacuum capacitor (100) according to claim 1, **characterized in that** the at least one shoulder (120) is located so to follow the entire circumference of the insulating element (103).

3. Vacuum capacitor (100) according to claim 3, **characterized in that** the first conductive collar (102) and/or the second conductive collar (104) are brazed to the insulating element (103) on the lower side of the shoulder.

4. Vacuum capacitor (100) according to any one of the preceding claims, **characterized in that** the at least one shoulder (120) is integrally formed with the insulating element (103).

5. Vacuum capacitor (100) according to claim 4, **characterized in that** the shoulder (120) has essentially sharp edges.

6. Vacuum capacitor (100) according to claim 4, **characterized in that** the shoulder (120) has essentially rounded edges.

7. Vacuum capacitor (100) according to any one of the preceding claims, **characterized in that** the shoulder (120) is flush with the outer surface of the insulating element (103).

8. Vacuum capacitor (100) according to any one of the preceding claims, **characterized in that** the shoulder (120) is located at a position that is a radially shorter distance from the central axis of the vacuum capacitor than the outer surface of the insulating element (103).

9. Vacuum capacitor (100) according to any one of the claims 1 to 3, **characterized in that** the at least one shoulder (120) is realized as a separate component (220), attached to the insulating element (103).

10. Vacuum capacitor (100) according to claim 9, **characterized in that** the separate component comprises at least one rounded edge (220a, 220b).

11. Vacuum capacitor (100) according to any one of the preceding claims, **characterized in that** the insulating element (103) comprises two shoulders that form a U-shaped groove which hosts the first braze joint (113) and/or the second braze joint (114).
